# EUROPÄISCHE PATENTSCHRIFT

(11) **EP 2 696 319 B1**
(45) Veröffentlichungstag und Bekanntmachung des Hinweises auf die Patenterteilung: **16.09.2020**
(21) Anmeldenummer: 13176023.3
(22) Anmeldetag: 11.07.2013
(51) Int. Cl.: G06Q 20/32, G06Q 20/34, G06Q 20/38

(54) **Verfahren zur Freigabe einer Transaktion**
Method for enabling a transaction
Procédé d'autorisation d'une transaction

(30) Priorität: 09.08.2012 DE 102012214132
(43) Veröffentlichungstag der Anmeldung: 12.02.2014
(60) Teilanmeldung: 18159302.1
(73) Patentinhaber: Bundesdruckerei GmbH, 10969 Berlin (DE)
(72) Erfinder: Bastian, Paul, 10243 Berlin (DE); Morgner, Frank, 12055 Berlin (DE)
(74) Vertreter: Richardt Patentanwälte PartG mbB

(56) Entgegenhaltungen:
- EP-A1- 2 230 648
- WO-A1-2004/032414
- WO-A1-2005/098764
- DE-A1-102004 046 847
- DE-A1-102006 048 797
- US-A- 5 280 527
- US-A1- 2008 029 607
- US-A1- 2011 284 633
- Astrid Heinz: "Siemens and AXSionics make online banking more secure: Fighting hackers with flicker code and fingerprints", , 6. Dezember 2007 (2007-12-06), Seiten 1-2, XP055030369, Munich Gefunden im Internet: URL:http://www.siemens.com/press/pool/en/p r_cc/2007/11_nov/sis200712030e.pdf [gefunden am 2012-06-19]

## Beschreibung

Die Erfindung betrifft ein Verfahren zur Freigabe einer Transaktion durch ein Computersystem, ein Computerprogrammprodukt, eine Signalfolge, sowie eine Chipkarte.

Online-Banking hat in den vergangenen Jahren einen signifikanten Wandel erlebt. Sicherheitstechnisch gelten iTAN-Verfahren als veraltet und die zunehmende Verbreitung von Smartphones bietet neue Möglichkeiten. So wurde in der Vergangenheit das sogenannte SMS-TAN-Verfahren eingeführt, was auch als Mobile-TAN (oder mTAN) bezeichnet wird. SMS-TAN umfasst die Verwendung des Übertragungskanals SMS, wobei nach einer Anweisung seitens des Kunden an die die Überweisung ausführende Bank von der Bank eine SMS mit einer TAN an das Mobiltelefon des Kunden geschickt wird. Der Kunde gibt daraufhin Online die per SMS empfangene TAN ein, um damit seine Transaktion frei zu schalten.

Aus der Pressemitteilung "Siemens und AXSionics make online banking more secure: Fighting hackers with flicker codes and fingerprints", Astrid Heinz, München (06.12.07), ist ein Verfahren zur Absicherung von online beauftragten Banktransaktionen bekannt, das als vertrauenswürdige Hardware eine sog. "Internet ID Card" mit einem Display zur Anzeige der Transaktionsdetails nutzt.

Der Erfindung liegt die Aufgabe zugrunde, ein verbessertes Verfahren zur Freigabe einer Transaktion durch ein Computersystem, ein entsprechendes Computerprogrammprodukt, eine entsprechende Signalfolge und eine Chipkarte zur Bereitstellung einer Transaktionsnummer für eine durch ein Computersystem freizugebende Transaktion zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird ein Verfahren zur Freigabe einer Transaktion durch ein Computersystem geschaffen, wobei das Verfahren zunächst die Übertragung von Transaktionsdetails von dem Computersystem an eine Chipkarte umfasst, wobei die Transaktionsdetails spezifische Informationen über die Transaktion umfassen. Die Transaktionsdetails werden durch die Chipkarte empfangen und daraufhin erfolgt eine Anzeige der Transaktionsdetails und einer Transaktionsnummer auf einem Display der Chipkarte, wobei die Transaktionsnummer spezifisch für die Transaktion ist. Aufgrund einer Benutzereingabe der Transaktionsnummer wird anschließend die Transaktionsnummer wieder durch das Computersystem empfangen. Das Computersystem validiert die Transaktionsnummer und gibt dann die Transaktion frei, wenn die empfangene Transaktionsnummer als gültig validiert wurde.

Ausführungsformen der Erfindung könnten den Vorteil haben, dass das Verfahren zur Freigabe der Transaktion hochsicher ist, ohne dass dem Benutzer die Last auferlegt wird, zur Durchführung von Transaktionen beispielsweise ein zusätzliches Gerät wie einen Chipkartenleser mit sich zu führen. Stattdessen wird die Anzeige der Transaktionsnummer direkt auf einem Display der Chipkarte durchgeführt, welche der Benutzer ohnehin ständig mit sich führt. Da außerdem die Transaktionsdetails auf dem Display der Chipkarte angezeigt werden, ist sich ein Benutzer sicher, dass die ihm angezeigte Transaktionsnummer auch tatsächlich für den Zweck vorgesehen ist, welcher in den Transaktionsdetails angegeben ist. Der Benutzer läuft also nicht Gefahr, für irgendeine x-beliebige Transaktion eine Transaktionsnummer an das Computersystem zu übermitteln, ohne genau darüber Bescheid zu wissen, für welche konkrete Transaktion diese Nummer nun also ihre Gültigkeit haben soll. Insbesondere im Falle einer Vielzahl von durchzuführenden Transaktionen, für welche jeweils eine Transaktionsnummer notwendig ist, eignet sich das Verfahren, da der Benutzer damit zielgerichtet immer die richtige Transaktionsnummer für jede Transaktion identifizieren kann.

Im Rahmen der vorliegenden Erfindung wird der Begriff der "Transaktionsdetails" verstanden als jegliche Information, welche eine Transaktion im Bankwesen kennzeichnet. Dies umfasst zum Beispiel eine Kontonummer und/oder eine Bankleitzahl des Transaktionsempfängers, ein Transaktionsbetrag, eine Uhrzeit, zu welcher die Transaktion durchgeführt werden soll oder bei welcher die Transaktion angefordert wurde, sowie Kontoinformationen bezüglich des Inhabers, der die Transaktion durchführen will. Die Transaktionsdetails können sich auch auf Teile der genannten Angaben beschränken, zum Beispiel lediglich auf einige Stellen der Empfängerkontonummer. Es sei darauf verwiesen, dass bekanntermaßen Transaktionsnummern auch zur Freischaltung der Änderungen von Einstellungen von Benutzerkonten verwendet werden können, wie beispielsweise das Ändern eines Benutzernamens oder das Ändern eines Freistellungsauftrags. In diesem Fall liegt also keine Transaktion im Sinne einer Geldüberweisung vor, sondern die Freigabe einer Aktion, welche unmittelbar mit dem Bankkonto zusammenhängt. Auch dies soll unter dem Begriff der Transaktionsdetails verstanden werden.

Erfindungsgemäß umfasst das Verfahren ferner den Schritt der Authentifizierung der Transaktionsdetails durch die Chipkarte, wobei durch die Authentifizierung überprüft wird, ob die Transaktionsdetails von dem Computersystem stammen, wobei nur im Falle einer erfolgreichen Authentifizierung die Transaktionsdetails und die Transaktionsnummer auf dem Display angezeigt werden. Zum Beispiel umfasst die Authentifizierung eine Überprüfung einer Signatur der Transaktionsdetails. Das Computersystem signiert also die Transaktionsdetails vor Übertragung der Transaktionsdetails an die Chipkarte. Die Chipkarte ist daraufhin in der Lage, zu überprüfen, ob die Transaktionsdetails auch tatsächlich in vertrauenswürdiger Weise von dem Computersystem stammen oder nicht.

Es werden die Transaktionsdetails mit einem sogenannten "Message Authentication Code" (MAC) versehen. Hierzu kann ein geheimer Schlüssel zum Einsatz kommen, welcher individuell für Computersystem und Chipkarte einmalig festgelegt wurde. Dieser Schlüssel kann dann sowohl beim Computersystem, als auch bei der Chipkarte dauerhaft sicher gespeichert sein. Der MAC kann daraufhin aus den zu sichernden Daten (den Transaktionsdetails) und dem Schlüssel berechnet werden.

Durch die Authentifizierung der Transaktionsdetails könnte sichergestellt werden, dass nur dann eine Anzeige der Transaktionsdetails und einer Transaktionsnummer auf dem Display der Chipkarte erfolgt, wenn sichergestellt ist, dass die Transaktionsdetails auch wirklich von dem Computersystem originär stammen.

Erfindungsgemäß erfolgt die Erzeugung einer Transaktionsnummer durch die Chipkarte. Dies könnte wiederum den Vorteil haben, dass vom Computersystem an die Chipkarte übertragene Informationen nicht in besonderer Weise gesichert sein müssen. Sollte ein Dritter unbefugt im Besitz dieser Informationen, das heißt der Transaktionsdetails gelangen, kann er mit diesen nichts weiter anfangen. Er weiß lediglich, dass eine Transaktion ansteht, ist jedoch aufgrund des Fehlens der Transaktionsnummer nicht in der Lage, diese Informationen zu missbrauchen.

Erfindungsgemäß wird die Transaktionsnummer aus den Transaktionsdetails erzeugt. Zum Beispiel könnte die Transaktionsnummer aus einem Schlüssel wie dem oben beschriebenen Schlüssel erzeugt werden, wobei der Schlüssel sowohl dem Computersystem als auch der Chipkarte zugänglich ist. Solch eine Vorgehensweise ist auch unter dem Begriff "HOTP" (HMAC-Based One Time Password Algorithm) bekannt.

Dadurch, dass die Transaktionsnummer aus den Transaktionsdetails erzeugt wird, wird sichergestellt, dass Chipkarte und Computersystem unabhängig voneinander in transaktionsindividueller Weise die Transaktionsnummer erzeugen können. Es ist also nicht der zusätzliche Austausch von gegebenenfalls geheimen Informationen notwendig, um die Transaktionsnummer zu erzeugen.

Nach einer Ausführungsform der Erfindung umfassen die Transaktionsdetails eine aktuelle Uhrzeit, wobei in die Erzeugung der Transaktionsnummer diese aktuelle Uhrzeit eingeht. Dies könnte den Vorteil haben, dass die Diversität der erzeugten Transaktionsnummer weiter erhöht wird. Selbst wenn z.B. mehrmalig Überweisungen getätigt werden, welche denselben Empfänger mit demselben Betrag betreffen, wird dies aufgrund unterschiedlicher Uhrzeiten immer zu unterschiedlichen Transaktionsnummer führen. Es kann also bei quasi identischen Transaktionen vermieden werden, dass hierzu identische Transaktionsnummern zum Einsatz kommen.

Nach einer weiteren Ausführungsform der Erfindung umfassen die Transaktionsdetails einen Wert eines Counters, wobei in die Erzeugung der Transaktionsnummer der Wert des Counters eingeht. Zum Beispiel ist der Counter im Computersystem gespeichert, wobei mit jeder Übertragung neuer Transaktionsdetails der Wert des Counters in vorbestimmter Weise verändert wird, zum Beispiel um eins erhöht wird. Alternativ ist es möglich, dass Computersystem und Chipkarte identische Counter getrennt voneinander verwalten und damit für sich mit jeder Übertragung neuer Transaktionsdetails den Wert dieses jeweiligen Counters in vorbestimmter Weise verändern. Auch dies könnte dazu beitragen, dass bei identischen Transaktionen die Diversität der erzeugten Transaktionsnummer garantiert ist. Allerdings hat die Variante, in welcher in die erzeugende Transaktionsnummer die aktuelle Uhrzeit eingeht, den Vorteil, dass auf eine wie auch immer geartete Counterverwaltung verzichtet werden kann. Dies vereinfacht das entsprechende Transaktionsnummernerzeugungsverfahren beträchtlich.

Nach einer Ausführungsform der Erfindung werden die Transaktionsdetails der Chipkarte über eine Schnittstelle zur Nahfeldkommunikation empfangen. Zum Beispiel könnten die Transaktionsdetails von einem mobilen Telekommunikationsgerät wie einem Mobiltelefon empfangen werden. Heutzutage könnten Mobiltelefone häufig mit Nahfeldkommunikationsfähigkeiten ausgestattet werden, so dass damit die Transaktionsdetails vom Computersystem an das Mobiltelefon und vom Mobiltelefon über dessen Nahfeldkommunikationsschnittstelle an die Chipkarte übermittelt werden können. Da Benutzer üblicherweise das Mobiltelefon ebenso wie die Chipkarte ohnehin ständig mit sich führen, kann auch hier ein hochsicheres Verfahren zur Freigabe einer Transaktion bereitgestellt werden, ohne dass dem Benutzer die Last aufgebürdet wird, darüber hinausgehend zusätzliche Geräte zur Freigabe der Transaktion mit sich zu führen.

Da jedoch in diesem Fall das Mobiltelefon lediglich als Datenübertragungsmedium verwendet wird, kann die Sicherheit des Verfahrens durch Eingriffe in das Mobiltelefon nicht kompromittiert werden. Ein zum Beispiel mit Malware befallenes Smartphone würde die Sicherheit des Verfahrens nicht gefährden, da zwischen Computersystem und Chipkarte lediglich solche Daten übertragen werden, welche nicht sicherheitskritisch sind. Eine Veränderung der Transaktionsdetails seitens der Malware würde das Verfahren ebenfalls nicht unsicherer machen, da der Benutzer in diesem Fall - aufgrund der Anzeige der veränderten Transaktionsdetails auf dem Chipkartendisplay - die Transaktion überhaupt nicht gegenüber dem Computersystem bestätigen würde. Dem Benutzer würde also auffallen, dass die Transaktionsdetails fehlerhaft sind, so dass er überhaupt nicht die, wenn überhaupt angezeigte, Transaktionsnummer an das Computersystem übermitteln würde.

Gleiches gilt auch für den Fall, das der Datenübertragungsweg der Transaktionsdetails vom Computersystem an das Mobiltelefon kompromittiert wird, in dem z.B. ein Router mit Malware befallen ist. Würden in diesem Fall die Transaktionsdetails manipuliert werden, so könnte vorzugsweise aufgrund der obig beschriebenen Authentifizierung der Transaktionsdetails sichergestellt werden, dass keine Anzeige der Transaktionsdetails und/oder einer Transaktionsnummer auf dem Display der Chipkarte erfolgt, da die Transaktionsdetails nicht wirklich originär von dem Computersystem stammen. Hier könnte stattdessen ein "Fehler" oder ein Warnhinweis auf dem Display der Chipkarte angezeigt werden.

Um nun eine Kommunikation der Transaktionsdetails an das mobile Telekommunikationsgerät zu ermöglichen, bieten sich verschiedene Möglichkeiten an. Beispielsweise könnte auf dem mobilen Telekommunikationsgerät eine Anwendung installiert werden, über welche mittels einer Datenverbindung die Daten vom Computersystem an das mobile Telekommunikationsgerät übertragen werden können ("App"). Auch könnten die Transaktionsdetails per SMS an das mobile Telekommunikationsgerät und von dort wieder die Schnittstelle zur Nahfeldkommunikation an die Chipkarte übermittelt werden.

Nach einer Ausführungsform der Erfindung umfasst die Übertragung der Transaktionsdetails an das mobile Telekommunikationsgerät eine visuelle oder akustische Bereitstellung eines durch das mobile Telekommunikationsgerät visuell oder akustisch erfassbaren Codes. Zum Beispiel stellt das Computersystem den Code in visueller Weise bereit, indem über das Internet auf einem Bildschirm des Benutzers ein QR-Code angezeigt wird. Dieser QR-Code umfasst dann entweder die Transaktionsdetails selbst oder aber eine Internet-Adresse, über welche wiederum das mobile Telekommunikationsgerät die Transaktionsdetails aus dem Internet abrufen kann. Über eine in vielen Telekommunikationsgeräten enthaltene Kamera kann dieser Code visuell erfasst werden.

Die visuelle oder akustische Bereitstellung eines durch das mobile Telekommunikationsgerät visuell oder akustisch erfassbaren Codes können den Vorteil haben, dass ein separater Kommunikationskanal zwischen Computersystem und mobilem Telekommunikationsgerät nicht notwendig ist. In anderen Worten könnte also das mobile Telekommunikationsgerät auch "Offline" ohne jegliche Kommunikationsverbindung "Over the Air" Zugang zum Code durch die visuelle oder akustische Erfassung erlangen, um daraufhin die mittels des Codes erfassten Transaktionsdetails über die Schnittstelle zur Nahfeldkommunikation an die Chipkarte zu übertragen.

In einem weiteren Aspekt betrifft die Erfindung ein Verfahren zur Bereitstellung einer Transaktionsnummer für eine durch ein Computersystem freizugebende Transaktion, wobei das Verfahren von einer Chipkarte durchgeführt wird, wobei das Verfahren umfasst:
- Empfang von Transaktionsdetails von dem Computersystem, wobei die Transaktionsdetails spezifische Informationen über die Transaktion umfassen,
- Anzeigen der Transaktionsdetails und einer Transaktionsnummer auf einem Display der Chipkarte, wobei die Transaktionsnummer spezifisch für die Transaktion ist.

In einem weiteren Aspekt betrifft die Erfindung ein Computerprogrammprodukt mit von einem Prozessor ausführbaren Instruktionen zur Durchführung der Verfahrensschritte, wie obig beschrieben.

In einem weiteren Aspekt betrifft die Erfindung eine Signalfolge, die, wenn in einem Computer abgespeichert, eine Abfolge von Instruktionen darstellt, die, wenn auf diesem Computer ausgeführt, das vorgeschilderte Verfahren ausführt.

In einem weiteren Aspekt betrifft die Erfindung eine Chipkarte zur Bereitstellung einer Transaktionsnummer für eine durch ein Computersystem freizugebende Transaktion, wobei die Chipkarte ein Display aufweist, wobei die Chipkarte ferner aufweist:
- Mittel zum Empfangen von Transaktionsdetails von dem Computersystem, wobei die Transaktionsdetails spezifische Informationen über die Transaktion umfassen,
- Anzeigen der Transaktionsdetails und einer Transaktionsnummer auf einem Display der Chipkarte, wobei die Transaktionsnummer spezifisch für die Transaktion ist.

Im Folgenden werden bevorzugte Ausführungsformen der Erfindung anhand der Zeichnungen erläutert. Es zeigen:
Fig. 1 schematische Ansicht eines Systems, um das Verfahren zur Freigabe einer Transaktion durch ein Computersystem zu ermöglichen,
Fig. 2 ein Flussdiagramm eines Verfahrens zur Freigabe einer Transaktion durch ein Computersystem.

Im Folgenden werden einander ähnliche Elemente mit den gleichen Bezugszeichen gekennzeichnet.

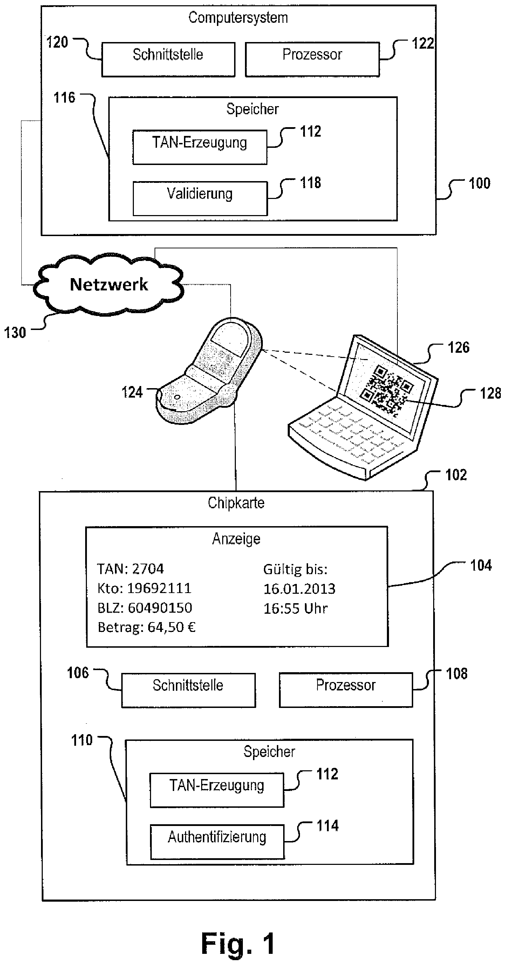

Die Figur 1 zeigt eine schematische Ansicht einer Systemarchitektur, welche es ermöglicht, eine Transaktion durch ein Computersystem 100 freizugeben. Das Computersystem ist zum Beispiel das Computersystem einer Bank, welches der Benutzer dazu veranlassen will, eine Transaktion durchzuführen. Beispielsweise möchte der Benutzer eine Banküberweisung von seinem Konto auf ein anderes Konto tätigen.

Hierzu verwendet der Benutzer seinen Computer 126, welcher über das Netzwerk 130, zum Beispiel das Internet mit dem Computersystem 100 verbunden ist. Die Verbindung erfolgt dabei über die Schnittstelle 120 des Computersystems 100. Nachdem der Benutzer zum Beispiel die Webseite des Computersystems 100 aufgerufen hat und dort die transaktionsspezifischen Daten wie Kontonummer, Bankleitzahl und Betrag eingegeben hat, ist es nun erforderlich, dass das Computersystem 100 sicherstellt, dass nur der wahre Kontoinhaber die Geldüberweisung, das heißt die Transaktion, durchführen kann.

Hierzu dient eine Transaktionsnummer, welche der Benutzer wieder über das Netzwerk 130 dem Computersystem mitteilen muss. Der Benutzer kann beispielsweise über die Webseite des Computersystems 100 die Transaktionsnummer an das Computersystem 100 übermitteln. Dies erfordert jedoch, dass der Benutzer Kenntnis von der Transaktionsnummer erhält.

Im Folgenden sei ohne Beschränkung der Allgemeinheit davon ausgegangen, dass der Benutzer über ein Mobiltelefon 124 verfügt. Das Mobiltelefon 124 ist mit einer Nahfeldkommunikationsschnittstelle ausgestattet, zum Beispiel einem RFID-NFC (Near Field Communication)-Transponder. Der Benutzer ist im Besitz einer Chipkarte 102, welche eine Schnittstelle 106 aufweist. Diese Schnittstelle ist in der Lage, die Daten zu empfangen, welche vom Mobiltelefon 124 über seine NFC-Schnittstelle übermittelt wurden. Die Chipkarte 102 ist also NFC-fähig.

Bei der Chipkarte 102 handelt es sich um eine Chipkarte, welche von dem Betreiber des Computersystems 100, also beispielsweise der Hausbank des Benutzers, ausgegeben wurde. Die Chipkarte 102 ist mit einem Prozessor 108 ausgestattet, der Instruktionen ausführen kann, welche im Speicher 110 der Chipkarte gespeichert sind.

Die Chipkarte 102 dient dazu, nebst Details der durchzuführenden Transaktion auch eine Transaktionsnummer anzuzeigen, welche durch den Benutzer dem Computersystem 100 mitzuteilen ist. Erst wenn die eingegebene Transaktionsnummer durch das Computersystem als richtig erkannt wurde, wird das Computersystem 100 die Transaktion freigeben.

Zum Beispiel kann das Computersystem 100 über eine Datenverbindung über das Netzwerk 130 Transaktionsdetails an das Mobiltelefon 124 senden. Diese Transaktionsdetails beinhalten beispielsweise die Empfängerkontonummer und - bankleitzahl, sowie den zu überweisenden Betrag, den der Benutzer zuvor über seinen Computer 126 an das Computersystem 100 übermittelt hat. Ferner wird als Teil der Transaktionsdetails eine aktuelle Uhrzeit übermittelt, zu welchem Zeitpunkt das Computersystem 100 die Anfrage zur Durchführung der Transaktion vom Computer 126 erhalten hat.

Die vom Computersystem 100 an das Mobiltelefon 124 übermittelten Transaktionsdetails werden nun vom mobilen Telekommunikationsgerät 124 über dessen Nahfeldkommunikationsschnittstelle an die Chipkarte 102 übertragen.

Der Speicher 110 der Chipkarte 102 weist ein Modul 114 zur Authentifizierung des Computersystems 100 auf. Beispielsweise sind die Transaktionsdetails, welche vom Computersystem 100 über das Mobiltelefon 124 an die Chipkarte 102 übertragen wurden, signiert. Durch das Modul 114 ist die Chipkarte 102 in der Lage, die Signatur zu prüfen. Im Falle einer erfolgreichen Prüfung wird durch ein weiteres Modul 112 im Speicher 110 eine Transaktionsnummer erzeugt. Im Beispiel der Figur 1 ist das die Transaktionsnummer 2704.

In die Erzeugung der Transaktionsnummer gehen neben Teilen der empfangenen Transaktionsdetails auch die besagte Uhrzeit ein, welche vom Computersystem 100 mit den Transaktionsdetails übermittelt wurde. Im Falle der Verwendung von HOTP geht in die Erzeugung der Transaktionsnummer auch noch das gemeinsam durch das Computersystem 100 und die Chipkarte 102 geteilte Geheimnis *K* ein, was weiter unten im Detail beschrieben ist. Dadurch, dass die genannte Uhrzeit (und gegebenenfalls ein entsprechendes Datum) eingeht, wird sichergestellt, dass die erzeugte Transaktionsnummer einmalig ist.

Daraufhin wird auf einem Display, das heißt eine Anzeige 104 der Chipkarte 102 nebst den Transaktionsdetails die TAN 2704 angezeigt. Ebenso kann ausgehend von der vom Computersystem 100 empfangenen Uhrzeit und dem empfangenen Datum ein Gültigkeitsintervall angegeben werden, welches angibt, wie lange die TAN 2704 vom Computersystem 100 akzeptiert werden wird.

Durch die angezeigte Bankverbindung und den angezeigten Betrag auf dem Display 104 ist der Benutzer nun in der Lage, zu überprüfen, ob die angezeigten Transaktionsdetails jenen Transaktionsdetails entsprechen, welche er mittels seines Computers 126 dem Computersystem 100 mitgeteilt hat. Sollte es hier eine Abweichung geben, kann sich der Benutzer sicher sein, dass aufgrund eines Unbefugten Eingriffs Dritter versucht wird, eine Transaktion zu fälschen. Dies könnte der Fall sein, wenn sich beispielsweise zwischen dem Computer 126 des Benutzers und dem Computersystem ein unbefugtes drittes Computersystem zwischengeschaltet hat, welches dem Benutzer eine nachgemachte Webseite des Computersystems 100 vorspielt "Phishing". Der Benutzer wähnt sich also auf der Internetseite des Computersystems 100, ist jedoch tatsächlich mit einem vollkommen anderen Computer verbunden. Nichtsdestotrotz ist das einzige Computersystem, welches der Chipkarte 102 Transaktionsdetails mitteilen kann, das tatsächliche Computersystem 100.

Nachdem der Benutzer die auf dem Display 104 angezeigten Transaktionsdetails als gültig überprüft hat, kann er die Transaktionsnummer 2704 auf seinem Computer 126 eingeben und an das Computersystem 100 über das Netzwerk 130 übermitteln. Das Computersystem 100 wird über seinen Prozessor 122 ebenfalls in der Lage sein, Programminstruktionen auszuführen. Dies sind zum Beispiel Programminstruktionen im Speicher 116, welche zum Beispiel ein Modul 112 zur TAN-Erzeugung umfassen. Das Modul 112 im Computersystem 100 entspricht dabei dem Modul 112 in der Chipkarte 102.

Dies bedeutet, dass sowohl Computersystem 100 als auch Chipkarte 102 unabhängig voneinander mittels deren Modulen 112 die Transaktionsnummer 2704 erzeugen. Im Speicher 116 des Computersystems 100 ist ferner ein Modul zur Validierung der Transaktionsnummer, die hier durch das Computersystem 100 erzeugt wurde und der Transaktionsnummer, welche vom Benutzer empfangen wurde, enthalten. Stimmen die beiden Transaktionsnummern überein, wird das Computersystem 100 die Transaktion freigeben, das heißt im vorliegenden Beispiel die Überweisung des Geldes veranlassen.

Das Modul 118 zur Validierung der Transaktionsnummern kann ferner die Funktionalität enthalten, eine zeitliche Gültigkeit der vom Benutzer empfangenen Transaktionsnummer zu überprüfen. So könnte festgelegt sein, dass eine Transaktionsnummer nie älter als fünf Minuten sein darf.

Anstatt nun die Transaktionsdetails vom Computersystem 100 über das Netzwerk 130 an das Mobiltelefon 124 zu übermitteln, besteht die Möglichkeit, das Mobiltelefon 124 unabhängig von einer bestehenden Verbindung mit dem Netzwerk 130 zu nutzen. Übliche Smartphones weisen beispielsweise eine optische Kamera auf, mittels welcher sogenannte QR-Codes 128 erfasst werden können. Aus diesem Grund wird über die Webseite des Computersystems 100 auf dem Bildschirm des Computers 126 der QR-Code 128 dargestellt. Der QR-Code 128 kann beispielsweise sämtliche Transaktionsdetails enthalten. Die Kamera des Smartphones 124 kann nun den QR-Code 128 erfassen und die darin enthaltenen Details über die Nahfeldkommunikationsschnittstelle des Mobiltelefons 124 an die Chipkarte 102 übermitteln. Auch so ist es möglich, dass die Chipkarte 102 die Transaktionsdetails erhält.

Dadurch, dass die Transaktionsnummer auf einem Display 104 der Chipkarte 102 angezeigt wird, ist die Sicherheit der Erzeugung der Transaktionsnummer als sehr hoch einzustufen. Im Gegensatz zur Anzeige einer Transaktionsnummer auf einem Display des Mobiltelefons 124 oder des Computers 126 ist das Display der Chipkarte 102 gegen Malware geschützt, weil die Chipkarte 102 ein geschlossenes System ist und der Inhalt des Displays 104 nicht manipuliert werden kann. Der Benutzer kann selbst in dem Fall, dass die Transaktionsdetails von einem Malware befallenen Computer oder Smartphone manipuliert wurden, bevor sie zur Chipkarte geschickt wurden, diesen Betrug aufdecken, da das Display der Chipkarte nicht manipuliert werden kann. Das Aufdecken des Betrugs erfolgt einfach dadurch, dass der Benutzer erkennt, dass die ihm angezeigten Transaktionsdetails nicht mit jenen Transaktionsdetails übereinstimmen, für welche er eine Transaktion angefordert hatte.

Es sei an dieser Stelle angemerkt, dass die Chipkarte 102 vollkommen unabhängig von der Außenwelt arbeitet, da sie keine direkte Verbindung zum Computersystem 100 benötigt. Sie benötigt außerdem keine eigene Uhrzeit, da diese, wenn sie in die Erzeugung der Transaktionsnummer eingehen soll, durch die Transaktionsdetails mit übermittelt werden kann. Außerdem bedeutet dies, dass die Chipkarte in vorteilhafter Weise über keine eigene Batterie verfügen muss.

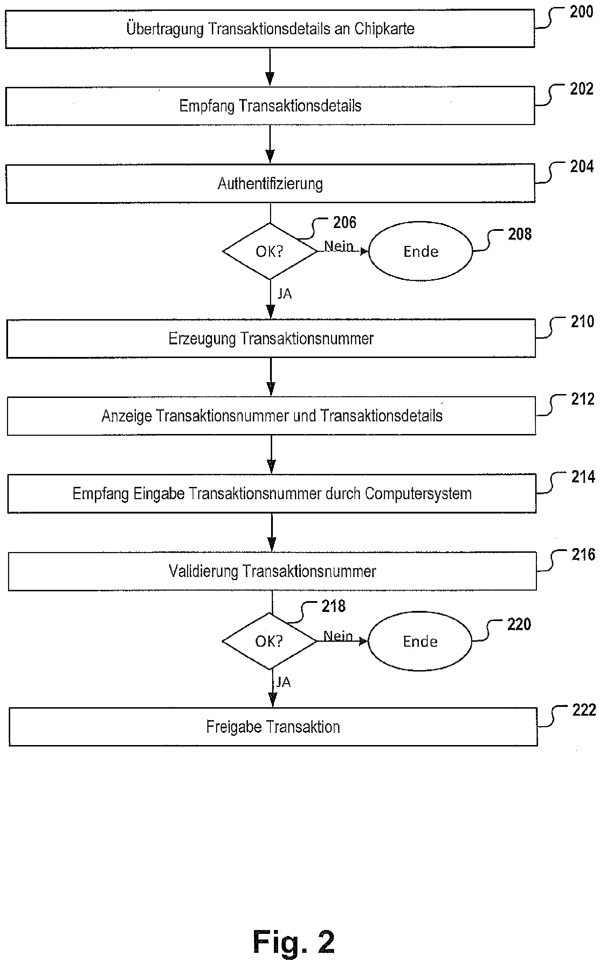

Die Figur 2 zeigt ein Flussdiagramm eines Verfahrens zur Freigabe einer Transaktion. Nachdem ein Benutzer einem Computersystem die gewünschte Transaktion mitgeteilt hat, werden Transaktionsdetails von dem Computersystem an die Chipkarte übermittelt (Schritt 200). Die Transaktionsdetails werden von der Chipkarte in Schritt 202 empfangen. Nun erfolgt in Schritt 204 eine Authentifizierung der mit den Transaktionsdetails empfangenen Daten. Beispielsweise signiert das Computersystem die Transaktionsdetails, woraufhin im Schritt 204 die Signatur durch die Chipkarte verifiziert wird. Stellt sich im Schritt 206 heraus, dass die Authentifizierung fehlgeschlagen ist, so endet das Verfahren im Schritt 208. Stellt sich jedoch im Schritt 206 heraus, dass die Daten richtig signiert wurden, so setzt sich das Verfahren mit der Erzeugung einer Transaktionsnummer im Schritt 210 fort. Beispielsweise kann die Chipkarte im Schritt 210 eine TAN gemäß der Vorschrift HOTP (K, S) berechnen. S beschreibt dabei die Transaktionsdetails und *K* ist ein geheimer Schlüssel, welcher lediglich dem Computersystem und der Chipkarte bekannt sind.

In Schritt 212 werden die Transaktionsdetails und die im Schritt 210 erzeugte Transaktionsnummer angezeigt. Anschließend überprüft der Benutzer zunächst die auf dem Kartendisplay angezeigten Transaktionsdetails und bestätigt mit der Eingabe der Transaktionsnummer die Transaktion gegenüber der Bank.

Im Schritt 214 wird die eingegebene Transaktionsnummer durch das Computersystem empfangen und in Schritt 216 validiert. Hierzu hat das Computersystem ebenso wie die Chipkarte die Transaktionsnummer für sich gemäß der Vorschrift HOTP (K, S) erzeugt.

Stellt sich in Schritt 218 heraus, dass die eingegebene Transaktionsnummer falsch ist, so endet das Verfahren in Schritt 220. Alternativ könnte bei einer fehlgeschlagenen Validierung eine Nachricht dem Benutzer übermittelt oder angezeigt werden, dass er seine Transaktionsnummer nochmals richtig eingeben soll.

Ergibt die Validierung in Schritt 218, dass die Transaktionsnummer, welche der Benutzer dem Computersystem übermittelt hat, richtig war, so erfolgt in Schritt 222 eine Freigabe der Transaktion durch das Computersystem.

### Bezugszeichenliste

- 100: Computersystem
- 102: Chipkarte
- 104: Anzeige
- 106: Schnittstelle
- 108: Prozessor
- 110: Speicher
- 112: Modul zur TAN-Erzeugung
- 114: Modul zur Authentifizierung
- 116: Speicher
- 118: Modul zur Validierung
- 120: Schnittstelle
- 122: Prozessor
- 124: Mobiltelefon
- 126: Computer
- 128: QR-Code
- 130: Netzwerk

## Patentansprüche

1. Verfahren zur Freigabe einer Transaktion durch ein Computersystem (100), wobei das Verfahren umfasst:
- Übertragung (200) von Transaktionsdetails von dem Computersystem (100) an eine Chipkarte (102), wobei die Transaktionsdetails spezifische Informationen über die Transaktion umfassen,
- Empfang (202) der Transaktionsdetails durch die Chipkarte (102),
- Erzeugung (210) einer Transaktionsnummer durch die Chipkarte (102), wobei die Transaktionsnummer spezifisch für die Transaktion ist,
- Anzeige (212) der Transaktionsdetails und der Transaktionsnummer auf einem Display (104) der Chipkarte (102),
- Empfang (214) der Transaktionsnummer durch das Computersystem (100) aufgrund einer Benutzereingabe der Transaktionsnummer,
- Validierung (216) der Transaktionsnummer durch das Computersystem (100) und
- Freigabe (222) der Transaktion, wenn die empfangene Transaktionsnummer als gültig validiert wurde,
wobei die Transaktionsdetails mit einem Message Authentication Code versehen sind, wobei hierzu ein geheimer Schlüssel zum Einsatz kommt, welcher individuell für das Computersystem (100) und die Chipkarte (102) einmalig festgelegt wurde, wobei der geheime Schlüssel sowohl beim Computersystem (100) als auch bei der Chipkarte (102) dauerhaft sicher gespeichert ist, wobei der Message Authentication Code aus den Transaktionsdetails und dem geheimen Schlüssel berechnet wird, wobei die Anzeige der Transaktionsdetails und der Transaktionsnummer auf dem Display (104) der Chipkarte (102) nur dann erfolgt, wenn sichergestellt ist, dass die Transaktionsdetails von dem Computersystem (100) originär stammen, wobei die Transaktionsnummer gemäß der Vorschrift HOTP (K, S) berechnet wird, wobei S die Transaktionsdetails beschreibt und K den geheimen Schlüssel beschreibt.

2. Verfahren nach Anspruch 1, wobei die Transaktionsdetails eine aktuelle Uhrzeit umfassen, wobei in die Erzeugung der Transaktionsnummer diese aktuelle Uhrzeit eingeht.

3. Verfahren nach Anspruch 1, wobei die Transaktionsdetails einen Wert eines Counters umfassen, wobei in die Erzeugung der Transaktionsnummer der Wert des Counters eingeht.

4. Verfahren nach einem der vorigen Ansprüche, wobei die Transaktionsdetails durch die Chipkarte (102) über eine Schnittstelle (106) zur Nahfeldkommunikation empfangen werden.

5. Verfahren nach Anspruch 4, wobei die Übertragung der Transaktionsdetails von dem Computersystem (100) an die Chipkarte (102) eine Übertragung der Transaktionsdetails an ein mobiles Telekommunikationsgerät (124) und von dem mobilen Telekommunikationsgerät (124) an die Schnittstelle der Chipkarte (102) umfasst.

6. Verfahren nach Anspruch 5, wobei die Übertragung der Transaktionsdetails an das mobile Telekommunikationsgerät (124) eine visuelle oder akustische Bereitstellung eines durch das mobile Telekommunikationsgerät (124) visuell oder akustisch erfassbaren Codes (128) umfasst.

7. Verfahren zur Bereitstellung einer Transaktionsnummer für eine durch ein Computersystem (100) freizugebende Transaktion, wobei das Verfahren von einer Chipkarte (102) durchgeführt wird, wobei das Verfahren umfasst:
- Empfang (202) von Transaktionsdetails von dem Computersystem (100), wobei die Transaktionsdetails spezifische Informationen über die Transaktion umfassen,
- Erzeugung (210) einer Transaktionsnummer durch die Chipkarte (102), wobei die Transaktionsnummer spezifisch für die Transaktion ist, ,
- Anzeige (212) der Transaktionsdetails und der Transaktionsnummer auf einem Display (104) der Chipkarte (102),
wobei die Transaktionsdetails mit einem Message Authentication Code versehen sind, wobei hierzu ein geheimer Schlüssel zum Einsatz kommt, welcher individuell für das Computersystem (100) und die Chipkarte (102) einmalig festgelegt wurde, wobei der geheime Schlüssel sowohl beim Computersystem (100) als auch bei der Chipkarte (102) dauerhaft sicher gespeichert ist, wobei der Message Authentication Code aus den Transaktionsdetails und dem geheimen Schlüssel berechnet wird, wobei die Anzeige der Transaktionsdetails und der Transaktionsnummer auf dem Display (104) der Chipkarte (102) nur dann erfolgt, wenn sichergestellt ist, dass die Transaktionsdetails von dem Computersystem (100) originär stammen,, wobei die Transaktionsnummer gemäß der Vorschrift HOTP (K, S) berechnet wird, wobei S die Transaktionsdetails beschreibt und K den geheimen Schlüssel beschreibt.

8. Computerprogrammprodukt mit von einem Prozessor ausführbaren Instruktionen zur Durchführung der Verfahrensschritte gemäß einem der vorigen Ansprüche.

9. Signalfolge, die, wenn in einem Computer abgespeichert, eine Abfolge von Instruktionen darstellt, die, wenn auf diesem Computer ausgeführt, das zuvor geschilderte Verfahren ausführt.

10. Chipkarte (102) zur Bereitstellung einer Transaktionsnummer für eine durch ein Computersystem (100) freizugebende Transaktion, wobei die Chipkarte (102) ein Display (104) aufweist, wobei die Chipkarte (102) ferner aufweist:
- Mittel zum Empfang von Transaktionsdetails von dem Computersystem (100), wobei die Transaktionsdetails spezifische Informationen über die Transaktion umfassen,
- Mittel zur Erzeugung einer Transaktionsnummer durch die Chipkarte (102), wobei die Transaktionsnummer spezifisch für die Transaktion ist,
- Mittel zur Anzeige der Transaktionsdetails und der Transaktionsnummer auf einem Display (104) der Chipkarte (102),
wobei die Transaktionsdetails mit einem Message Authentication Code versehen sind, wobei hierzu ein geheimer Schlüssel zum Einsatz kommt, welcher individuell für das Computersystem (100) und die Chipkarte (102) einmalig festgelegt wurde, wobei der geheime Schlüssel sowohl beim Computersystem (100) als auch bei der Chipkarte (102) dauerhaft sicher gespeichert ist, wobei der Message Authentication Code aus den Transaktionsdetails und dem geheimen Schlüssel berechnet wird, wobei das Mittel zur Anzeige der Transaktionsdetails und der Transaktionsnummer auf dem Display (104) der Chipkarte (102) dazu ausgebildet ist, dass die Anzeige nur dann erfolgt, wenn sichergestellt ist, dass die Transaktionsdetails von dem Computersystem (100) originär stammen, wobei das Mittel zur Erzeugung einer Transaktionsnummer dazu ausgebildet ist, die Transaktionsnummer gemäß der Vorschrift HOTP (K, S) zu berechnen, wobei S die Transaktionsdetails beschreibt und K den geheimen Schlüssel beschreibt.

## Claims

1. A method for releasing a transaction by a computer system (100), the method comprising:
- transmitting (200) transaction details from the computer system (100) to a chip card (102), the transaction details including specific information about the transaction;
- receiving (202) the transaction details by the chip card (102);
- generating (210) a transaction number by the chip card (102), the transaction number being specific to the transaction,
- displaying (212) the transaction details and the transaction number on a display (104) of the chip card (102),
- receiving (214) the transaction number by the computer system (100) on account of a user input of the transaction number;
- validating (216) the transaction number by the computer system (100); and
- releasing (222) the transaction if the received transaction number has been validated as valid;
wherein the transaction details are provided with a Message Authentication Code, wherein for this purpose a secret key is used, which has been uniquely determined individually for the computer system (100) and the chip card (102), wherein the secret key is securely stored permanently both on the computer system (100) and on the chip card (102), wherein the Message Authentication Code is calculated from the transaction details and the secret key, wherein the transaction details and the transaction number are then displayed on the display (104) of the chip card (102) only if it is assured that the transaction details originate originally from the computer system (100), wherein the transaction number is calculated in accordance with the HOTP (K, S) rule, wherein S describes the transaction details and K describes the secret key.

2. The method according to claim 1, wherein the transaction details include a current time and this current time is included in the generation of the transaction number.

3. The method according to claim 1, wherein the transaction details include a value of a counter and the value of the counter is included in the generation of the transaction number.

4. The method according to any one of the preceding claims, wherein the transaction details are received by the chip card (102) via an interface (106) for near-field communication.

5. The method according to claim 4, wherein the transmission of the transaction details from the computer system (100) to the chip card (102) includes a transmission of the transaction details to a mobile telecommunications device (124) and from the mobile telecommunications device (124) to the interface of the chip card (102).

6. The method according to claim 5, wherein the transmission of the transaction details to the mobile telecommunications device (124) includes a visual or acoustic provision of a code (128) detectable visually or acoustically by the mobile telecommunications device (124).

7. A method for providing a transaction number for a transaction to be released by a computer system (100), wherein the method is carried out by a chip card (102), the method comprising:
- receiving (202) transaction details from the computer system (100), the transaction details including specific information about the transaction;
- generating (210) a transaction number by the chip card (102), the transaction number being specific to the transaction,
- displaying (212) the transaction details and the transaction number on a display (104) of the chip card (102),
wherein the transaction details are provided with a Message Authentication Code, wherein for this purpose a secret key is used, which has been uniquely determined individually for the computer system (100) and the chip card (102), wherein the secret key is securely stored permanently both on the computer system (100) and on the chip card (102), wherein the Message Authentication Code is calculated from the transaction details and the secret key, wherein the transaction details and the transaction number are then displayed on the display (104) of the chip card (102) only if it is assured that the transaction details originate originally from the computer system (100), wherein the transaction number is calculated in accordance with the HOTP (K, S) rule, wherein S describes the transaction details and K describes the secret key.

8. A computer program product with instructions executable by a processor for carrying out the method steps according to any one of the preceding claims.

9. A signal sequence which, when stored in a computer, represents a sequence of instructions which, when executed on this computer, executes the previously described method.

10. A chip card (102) for providing a transaction number for a transaction to be released by a computer system (100), wherein the chip card (102) has a display (104), the chip card (102) also having:
- means for receiving transaction details from the computer system (100), the transaction details including specific information about the transaction;
- means for generating a transaction number by the chip card (102), the transaction number being specific to the transaction;
- means for displaying the transaction details and the transaction number on a display (104) of the chip card (102);
wherein the transaction details are provided with a Message Authentication Code, wherein for this purpose a secret key is used, which has been uniquely determined individually for the computer system (100) and the chip card (102), wherein the secret key is securely stored permanently both on the computer system (100) and on the chip card (102), wherein the Message Authentication Code is calculated from the transaction details and the secret key, wherein the means for displaying the transaction details and the transaction number on the display (104) of the chip card (102) are designed such that the display is implemented only if it is assured that the transaction details originate originally from the computer system (100), wherein the means for generating a transaction number is designed to calculate the transaction number in accordance with the HOTP (K, S) rule, wherein S describes the transaction details and K describes the secret key.

## Revendications

1. Procédé de délivrance d'une transaction par un système informatique (100), où le procédé comprend :
- la transmission (200) de détails de la transaction du système informatique (100) à une carte à puce (102), où les détails de la transaction comprennent des informations spécifiques concernant la transaction,
- la réception (202) des détails de la transaction par la carte à puce (102),
- la création (210) d'un numéro de transaction par la carte à puce (102), où le numéro de transaction est spécifique pour la transaction,
- l'affichage (212) des détails de la transaction et du numéro de transaction sur un affichage (104) de la carte à puce (102),
- la réception (214) du numéro de transaction par le système informatique (100) en raison d'une entrée d'utilisateur du numéro de transaction,
- la validation (216) du numéro de transaction le système informatique (100) et
- la délivrance (222) de la transaction lorsque le numéro de transaction a été déclaré valide,
dans lequel les détails de la transaction sont munis d'un code d'authentification de message, où une clé privée est employée à cette fin, laquelle a été fixée une fois de manière individuelle pour le système informatique (100) et la carte à puce (102), où la clé privée est stockée de manière sécurisée durable à la fois auprès du système informatique (100) et auprès de la carte à puce (102), où le code d'authentification de message est calculé à partir des détails de la transaction et de la clé privée, où l'affichage des détails de la transaction et du numéro de transaction n'a lieu sur l'affichage (104) de la carte à puce (102) que s'il est sûr que les détails de la transaction sont originaires du système informatique (100), où le numéro de transaction est calculé selon le code HOTP (K, S), où S décrit les détails de la transaction et K décrit la clé privée.

2. Procédé selon la revendication 1, dans lequel les détails de la transaction comprennent une heure actuelle, où cette heure est impliquée dans la création du numéro de transaction.

3. Procédé selon la revendication 1, dans lequel les détails de la transaction comprennent une valeur d'un compteur, où la valeur du compteur est impliquée dans la création du numéro de transaction.

4. Procédé selon l'une des revendications précédentes, dans lequel les détails de la transaction sont reçus par la carte à puce (102) par le biais d'une interface (106) pour une communication en champ proche.

5. Procédé selon la revendication 4, dans lequel la transmission des détails de la transaction du système informatique (100) vers la carte à puce (102) comprend une transmission des détails de la transaction à un appareil de télécommunications mobile (124) et de l'appareil de télécommunications mobile (124) à l'interface de la carte à puce (102).

6. Procédé selon la revendication 5, dans lequel la transmission des détails de la transaction à l'appareil de télécommunications mobile (124) comprend une mise au point d'un code (128) détectable par voie visuelle ou acoustique par l'appareil de télécommunications mobile (124).

7. Procédé de mise au point d'un numéro de transaction pour une transaction devant être délivrée par un système informatique (100), où le procédé est exécuté par une carte à puce (102), où le procédé comprend :
- la réception (202) de détails de la transaction d'un système informatique (100), où les détails de la transaction comprennent des informations spécifiques concernant la transaction,
- la création (210) d'un numéro de transaction par la carte à puce (102), où le numéro de transaction est spécifique pour la transaction,
- l'affichage (212) des détails de la transaction et du numéro de transaction sur un affichage (104) de la carte à puce (102),
dans lequel les détails de la transaction sont munis d'un code d'authentification de message, où une clé privée est employée à cette fin, laquelle a été fixée une fois de manière individuelle pour le système informatique (100) et la carte à puce (102), où la clé privée est stockée de manière sécurisée durable à la fois auprès du système informatique (100) et auprès de la carte à puce (102), où le code d'authentification de message est calculé à partir des détails de la transaction et de la clé privée, où l'affichage des détails de la transaction et du numéro de transaction n'a lieu sur l'affichage (104) de la carte à puce (102) que s'il est sûr que les détails de la transaction sont originaires du système informatique (100), où le numéro de transaction est calculé selon le code HOTP (K, S), où S décrit les détails de la transaction et K décrit la clé privée.

8. Produit-programme informatique avec des instructions exécutables par un processeur permettant l'exécution des étapes de procédé selon l'une des revendications précédentes.

9. Suite de signaux qui, lorsqu'elle est sauvegardée dans un ordinateur, représente une suite d'instructions qui, lorsqu'elles sont exécutées sur cet ordinateur, exécute le procédé décrit précédemment.

10. Carte à puce (102) permettant la mise au point d'un numéro de transaction pour une transaction devant être délivrée par un système informatique (100), où la carte à puce (102) présente un affichage (104), où la carte à puce (102) présente en outre :
- des moyens pour la réception de détails de la transaction du système informatique (100), où les détails de la transaction comprennent des informations spécifiques concernant la transaction,
- des moyens pour la création d'un numéro de transaction par la carte à puce (102), où le numéro de transaction est spécifique pour la transaction,
- des moyens d'affichage des détails de la transaction et du numéro de transaction sur l'affichage (104) de la carte à puce (102),
dans lequel les détails de la transaction sont munis d'un code d'authentification de message, où une clé privée est employée à cette fin, laquelle a été fixée une fois de manière individuelle pour le système informatique (100) et la carte à puce (102), où la clé privée est stockée de manière sécurisée durable à la fois auprès du système informatique (100) et auprès de la carte à puce (102), où le code d'authentification de message est calculé à partir des détails de la transaction et de la clé privée, où les moyens d'affichage des détails de la transaction et du numéro de transaction sont conçus de sorte que l'affichage n'a lieu que s'il est sûr que les détails de la transaction sont originaires du système informatique (100), où les moyens de création d'un numéro de transaction sont conçus pour calculer le numéro de transaction selon le code HOTP (K, S), où S décrit les détails de la transaction et K décrit la clé privée.
